# EUROPÄISCHE PATENTSCHRIFT

(11) **EP 2 007 557 B1**
(45) Veröffentlichungstag und Bekanntmachung des Hinweises auf die Patenterteilung: **26.06.2013**
(21) Anmeldenummer: 07704475.8
(22) Anmeldetag: 09.02.2007
(51) Int. Cl.: B25F 5/00, B25F 5/02, H01M 2/10, H01M 10/46

(54) **AKKU-HANDWERKZEUGMASCHINE**
BATTERY-OPERATED PORTABLE POWER TOOL
MACHINE OUTIL MANUELLE A ACCUMULATEUR

(30) Priorität: 07.04.2006 DE 102006018008
(43) Veröffentlichungstag der Anmeldung: 31.12.2008
(73) Patentinhaber: Robert Bosch GmbH, 70442 Stuttgart (DE)
(72) Erfinder: HIRT, Daniel, 72138 Kirchentellinsfurt (DE)
(86) Internationale Anmeldenummer: PCT/EP2007/051259
(87) Internationale Veröffentlichungsnummer: WO 2007/115846

(56) Entgegenhaltungen:
- DE-A1-102004 040 922
- JP-A- 10 044 064
- US-A1- 2001 000 945
- US-A1- 2005 280 393
- US-B1- 6 392 381

## Beschreibung

### Stand der Technik

Die vorliegende Erfindung geht aus von einer Akku-Handwerkzeugmaschine und einem Akkupack nach dem Oberbegriff des Anspruchs 1.

Es sind schon, wie zum Beispiel in US 2001/0000945 A1, JP 10-44064 A und US 2005/0280393 A1 beschrieben, Akku-Handwerkzeugmaschinen mit einem daran an einer Schnittstelle lösbar kuppelbaren Akkupack bekannt. Dieser wird zum Laden von der Akku-Handwerkzeugmaschine gelöst, mit seinen dem Bereich der Schnittstelle zugeordneten Ladekontakten in eine Ladestation gesetzt und nach dem Laden wieder an die Akku-Handwerkzeugmaschine angesteckt. Das Lösen und Wiedereinkuppeln des geladenen Akkupacks ist verhältnismäßig zeitaufwändig.

Aus DE 102004040922 A1 ist eine Handwerkzeugmaschine mit einer Wechselhandwerkzeugakkueinheit bekannt, welche eine Kopplungseinheit zum Beladen der Wechselhandwerkzeugakkueinheit im montierten Zustand an einer Handwerkzeugmaschine aufweist.

In US 6392381 B1 ist ein Wechselakkupack beschrieben, der an seiner Unterseite eine Ausnehmung zur Aufnahme von zwei schwenkbar gelagerten Kontaktplatten aufweist.

Weiter sind, zum Beispiel aus US 2005/0280393 A1, auch Akku-Handwerkzeugmaschinen mit im Inneren des Gehäuses fest eingebauten Lithium-Ionen-Akkus bekannt, die außen am Gehäuse liegende Ladekontakte haben. Diese Handwerkzeugmaschinen sind kompakt und handlich. Ihnen fehlt aber der Vorzug, dass ein leerer gegen einen sofort verfügbaren, voll aufgeladenen Wechsel-Akku tauschbar ist. Damit bedeutet für diese Handwerkzeugmaschinen ein leerer Akku zwangsläufig eine der Ladedauer entsprechende Einsatzpause.

### Vorteile der Erfindung

Die Erfindung mit den Merkmalen des Anspruchs 1 hat den Vorteil, dass das Laden sowohl des an die Handwerkzeugmaschine gekuppelten als auch des von der Handwerkzeugmaschine gelösten Akkupacks gleichermaßen sicher ablaufen kann. Damit kann der Akkupack nach einer Tiefentladung allein aufgeladen werden, wobei die Handwerkzeugmaschine mit einem Wechsel-Akkupack bestückbar und so ohne weitere Unterbrechung weiter benutzbar ist. In Arbeitspausen kann der Akkupack ohne Lösen von der Akku-Handwerkzeugmaschine gemeinsam mit dieser ohne weiteren Aufwand in eine Ladestation gesetzt und darin aufgeladen werden. ,

Dadurch, dass die weiteren Kontaktmittel des Akkupacks an dessen Außenflächen sitzen, können diese durch Einsetzen des Akkupacks in eine insbesondere den Akkupack umgreifende Ladeschale besonders sicher in Kontaktposition zu Gegenkontakten der Ladeschale gebracht werden.

Dadurch, dass die weiteren Kupplungs- bzw. Kontaktmittel federnd, von außen zugänglich ausgestaltet sind, ist eine einfache Ausgestaltung der Seite mit den Gegenkontakten, insbesondere der Ladeschale bzw. des Ladesteckers möglich.

Dadurch, dass Kontaktschutzmittel für die weiteren Kupplungs- bzw. Kontaktmittel angeordnet sind, die deren ungewollten elektrischen Kontakt nach außen verhindern, ist ein Sicherheitsmittel gegen Folgen, beispielsweise gegen einen Kurzschluss, eines solchen ungewollten Kontakts geschaffen.

Dadurch, dass die weiteren Kupplungs- bzw. Kontaktmittel von den inneren Kupplungs- bzw. Kontaktmitteln zwischen Akkupack und Handwerkzeugmaschine abzweigen, insbesondere mit diesen einstückig sind, sind die Herstellungskosten des Akkupacks verringert.

Dadurch, dass die Kupplungs- bzw. Kontaktmittel als Tulpenkontakte ausgestaltet sind, von denen die weiteren Kupplungs- bzw. Kontaktmittel fahnenartig wegführen, insbesondere nach außen ragend abgewinkelt sind, sind sie als einfach herstellbares StanzBiegeteil ausgestaltbar.

Dadurch, dass die weiteren Kupplungs- bzw. Kontaktmittel innerhalb der Außenkontur des Akkupacks, insbesondere in Vertiefungen, angeordnet sind, ist ein ungewolltes Berühren bzw. Kurzschluß der weiteren Kupplungs- bzw. Kontaktmittel kaum möglich. Dadurch, dass die weiteren Kupplungs- bzw. Kontaktmittel nahe der Unterseite des Akkupacks, insbesondere in einer gemeinsamen Vertiefung als Kontaktleiste angeordnet sind, ist deren ungewollte Kontaktierung ausgeschlossen und die gewollte Kontaktierung mit einem Ladegerät oder dergl. besonders sicher.

Dadurch, dass die Vertiefung, insbesondere konturbündig, so mit entsprechenden Mitteln überdeckbar und/oder verschließbar ist, dass die Kupplungs- bzw. Kontaktmittel nicht sichtbar und gegen ungewollte Kontaktierung gesichert, insbesondere berührungssicher und nicht zugänglich sind, sind Folgeschäden besonders sicher ausgeschlossen.

Dadurch, dass die weiteren Kupplungs- bzw. Kontaktmittel der elektrischen Leistungsübertragung vom Akkupack eine Schnittstelle für weitere Stromverbraucher bilden, ist der Akkupack allein oder an die Handwerkzeugmaschine gekuppelt, als Stromquelle für weitere Verbraucher nutzbar.

### Zeichnung

Nachstehend ist die Erfindung anhand eines Ausführungsbeispiels mit zugehöriger Zeichnung näher erläutert.

Es zeigen
Figur 1 eine Seitenansicht einer Handwerkzeugmaschine mit dem erfindungsgemäßen Akkupack
Figur 2 eine räumliche Darstellung des erfindungsgemäßen Akkupacks
Figur 3 eine räumliche Darstellung einer weiteren Variante des erfindungsgemäßen Akkupacks und
Figur 4 den Akkupack gemäß Figur 3 mit freiliegenden Kontaktmitteln

### Ausführungsbeispiel

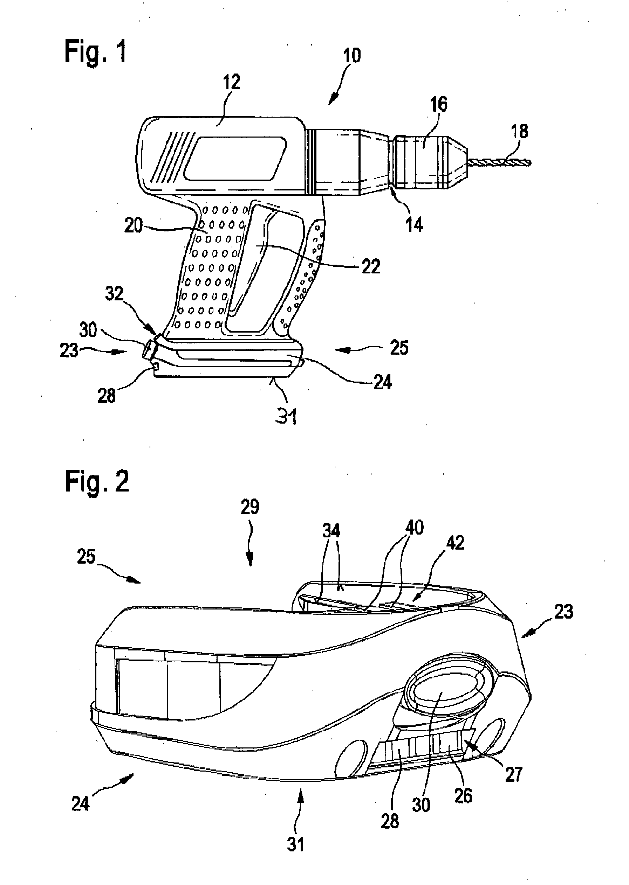

Eine in Figur 1 in Seitenansicht dargestellte Handwerkzeugmaschine 10 ist als pistolenartiger Akku-Bohr-Schrauber ausgestaltet. Dieser weist ein Gehäuse 12 auf, das an seiner Vorderseite am Ende einer nicht dargestellten Abtriebswelle ein Spannfutter 16 trägt, das zur Aufnahme eines Schraubbits 18 oder dergl. zur Übertragung einer Dreh-Arbeitsbewegung vorgesehen ist. Dessen pistolenartiger Handgriff 20 trägt vorn eine Schalttaste 22 zum Ein- und Ausschalten des Motors und an seinem unteren Ende eine Schnittstel-le 32 mit elektrischen und mechanischen Kupplungsmitteln 34 zur lösbar arretierbaren Aufnahme eines von hinten nach vorn waagerecht einschiebbar befestigbaren Akkupacks 24.

Das Akkupack 24 ist wie ein Boot mit flachem Boden und vorn teilweise offenen Bordwänden ausgestaltet, die seitlich und hinten auf gleicher Höhe enden. Das Akkupack 24 trägt an seiner Rückseite 23 etwa mittig eine Drucktaste 30, bei deren Betätigung/Drücken in Richtung der Vorderseite 25 ein Riegel des Akkupacks 24 in seine Löseposition rückt und damit eine form- und oder kraftschlüssige Verriegelung des Akkupacks 24 am Ende der Handgriffs 20 der Handwerkzeugmaschine 10 aufhebt. Anschlleßend ist der Akkupack 24 entgegen der Betätigungsrichtung der Drucktaste 30 schubladenartig an der Schnittstelle 32 von der Handwerkzeugmaschine 10 lösbar bzw. entnehmbar.

Unterhalb der Drucktaste 30 sind an der Rückseite 23 des Akkupacks 24 nahe der Unterseite 31 in einer quer verlaufenden, nutartigen Vertiefung 27 leistenartige Ladekontakte 28 angeordnet, die über elektrische Kontaktierung mit entsprechend angeordneten Gegenkontakten eines nichtdargestellten Ladegeräts den Ladevorgang für das Akkupack 24 ermöglichen. Der Ladevorgang kann wahlweise durch Einsetzen des Akkupacks 24 allein oder gemeinsam mit der Handwerkzeugmaschine 10 in die Ladeschale erreicht werden. Die Ladekontakte 28 sind durch Anordnung in der Vertiefung 27 gegen ungewollte Berührung insbesondere gegen elektrischen Kontakt bzw. Kurzschluss geschützt.

Figur 2 zeigt eine räumliche Darstellung des erfindungsgemäßen Akkupacks 24 mit Blick auf seine Rückseite 23 mit der mittigen Drucktaste 30, der darunter nahe der Unterseite 31 verlaufenden Vertiefung 27 mit den Ladekontakten 28. Dabei ist erkennbar, dass an dessen Oberseite 29 leistenartige Längsführungsmittel 34 angeordnet sind, die mit entsprechenden Gegenführungsmitteln an der Schnittstelle 32 des Handgriffs 20 in Eingriff bringbar sind. Dazu ist der Akkupack 24 zunächst mit seiner Vorderseite 25 hinten an die Schnittstelle 32 des Handgriffs 20 anzusetzen und schubladenartig bis zum Anschlag nach vorn zu schieben. Dabei ist er, insbesondere überrastend, in seiner vorgesehenen, betriebsgemäßen Position arretierbar, in der zugleich die elektrische

Kontaktierung vorn Akkupack 24 zum nicht dargestellten Schalter bzw, Motor hergestellt und die Energieversorgung des Antriebs der Handwerkzeugmaschine 10 sichergestellt ist.

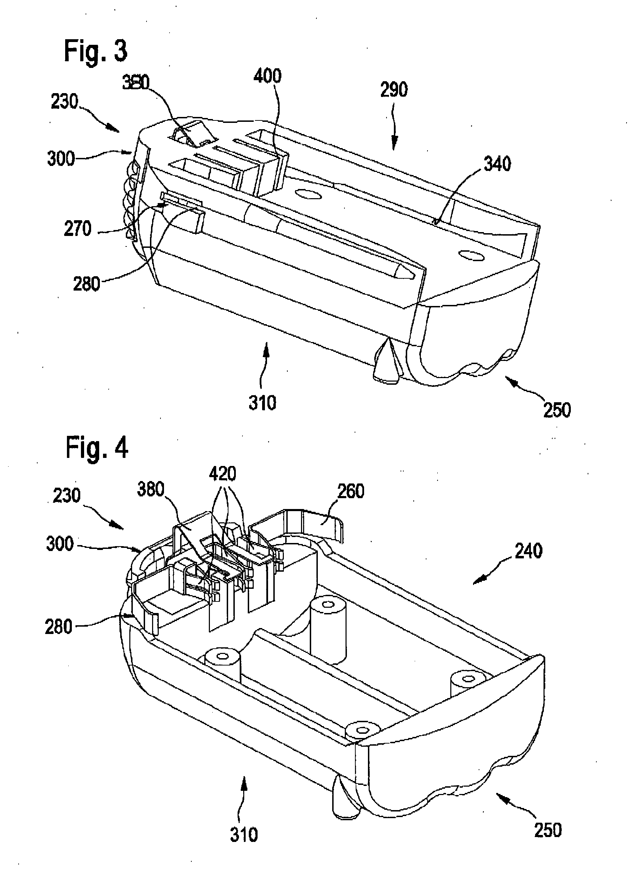

Die in Figur 3 räumlich dargestellte weitere Variante des erfindungsgemäßen Akkupacks 240 zeigt vor allem seine Front- 250 und Oberseite 290 lässt die Längsführungsmittel 340 zum schubladenartigen Einschieben an der Handwerkzeugmaschine 10 erkennen. Dabei ist eine aus einem Schlitz in der Oberseite 290 des Akkupacks 240 nach oben ragende, gewölbte, blattfederartige Überrastfeder 380 zum Hintergreifen eines nichtdargestellten überfahrbaren Vorsprungs im Bereich der Schnittstelle 32 seitens des Handgriffs 20 beim Einschieben des Akkupacks 240 erkennbar, die dessen Arbeitsposition gegenüber der Handwerkzeugmaschine 10 formschlüssig sichert. Die Überrastfeder 380 ist mittels der Drucktaste 300 in Einschubrichtung bzw. entgegen der Auszugsrichtung des Akkupacks 240 in Ihre Löseposition nach innen zum Akkupack 240 hin bzw. von der Schnittstelle 32 der Handwerkzeugmaschine 10 weg betätigbar. Vor der Überrastfeder 380 in Richtung Vorderseite 240 sind drei Kontaktschlitze 400 in die Oberseite 290 des Gehäuses des Akkupacks 240 eingebracht, hinter denen (Fig. 3) je ein Tulpenkontakt 420 zum Eintritt von nicht dargestellten maschinenseitigen Messerkontakten zur elektrischen Verbindung des nicht dargestellten Antriebsmotors mit der Stromversorgung des Akkupacks 240.

In Figur 4 ist der Akkupack gemäß Figur 3 teilweise demontiert, mit entfernten Akku-Zellen und mit freiliegenden als Tulpenkontakte 420 ausgestalteten Kontaktmitteln sichtbar. Dabei ist erkennbar, dass die Überrastfeder 380 gemeinsam mit der Drucktaste 300 verschlebbar ist und beim Verschieben zur Vorderseite 250 des Akkupacks 240 durch Eintauchen in den Schlitz durch Aufgleiten an der Unterseite des Schlitzes nach unten zur Unterseite 310 des Akkupacks 240 hin gezwungen wird.

## Patentansprüche

1. Akkupack mit mechanischen und elektrischen Gegenkupplungsmitteln (34, 40, 42, 380) zum lösbaren Verbinden mit einem, insbesondere mobilen, Stromverbraucher, vorzugsweise einer Akku-Handwerkzeugmaschine (10), und/oder einem Ladegerät, wobei der Akkupack (24, 240) mindestens ein weiteres als elektrisches Ladekontaktmittel (26, 28, 260, 280) ausgestaltetes Gegenkupplungsmittel (26, 28, 260, 280) trägt, das dann von außen her zugänglich ist, wenn der Akkupack (24, 240) an die Akku-Handwerkzeugmaschine (10) angekuppelt ist, wobei die weiteren Gegenkupplungsmittel (26, 28, 260, 280) von den Gegenkupplungsmitteln (42, 380) abzweigen, **dadurch gekennzeichnet, dass** die weiteren Gegenkupplungsmittel (26, 28, 260, 280) und die Gegenkupplungsmitteln (42, 380) einstückig ausgebildet sind.

2. Akkupack nach Anspruch 1, **dadurch gekennzeichnet, dass** das mindestens eine weitere Gegenkupplungsmittel (26, 28, 260, 280) an einer anderen Seite als der mit den mechanischen und elektrischen Gegenkupplungsmitteln (34, 40, 42, 380), vorzugsweise außen an seiner Unterseite (31, 310) und/oder seitlich angeordnet ist.

3. Akkupack nach Anspruch 1 oder 2, **dadurch gekennzeichnet, dass** der Akkupack (24, 240) als Lithium-Ionen-Akku ausgestaltet ist.

4. Akkupack nach einem der Ansprüche 1 bis 3, **dadurch gekennzeichnet, dass** das mindestens eine, insbesondere zwei, weitere Gegenkupplungsmittel (26, 28, 260, 280) federnd, freiliegend ausgestaltet sind.

5. Akkupack nach einem der Ansprüche 1 bis 4, **dadurch gekennzeichnet, dass** Kontaktschutzmittel (27, 270) für das weitere Gegenkupplungsmittel (26, 28, 260, 280) angeordnet sind, die ungewollten elektrischen Kontakt nach außen verhindern.

6. Akkupack nach einem der Ansprüche 1 bis 5, **dadurch gekennzeichnet, dass** die Gegenkupplungsmittel als Tulpenkontakt (420) ausgestaltet sind, von denen die weiteren Gegenkupplungsmittel (260, 280) fahnenartig abgewinkelt sind.

7. Akkupack nach einem der Ansprüche 1 bis 6, **dadurch gekennzeichnet, dass** die weiteren Gegenkupplungsmittel (26, 28, 260, 280) innerhalb der Außenkontur des Akkupacks (24, 240), insbesondere in Vertiefungen (27, 270) des Gehäuses, angeordnet sind.

8. Akkupack nach einem der Ansprüche 1 bis 7, **dadurch gekennzeichnet, dass** die weiteren Gegenkupplungsmittel (26, 28) auf der Rückseite (23) nahe der Unterseite (31) des Akkupacks (24), insbesondere in einer gemeinsamen Vertiefung (27) des Gehäuses, angeordnet sind.

9. Akkupack nach einem der Ansprüche 1 bis 8, **dadurch gekennzeichnet, dass** die Vertiefung (27, 270), insbesondere konturbündig, so überdeckbar/verschließbar ist, dass die weiteren Gegenkupplungsmittel (26, 28, 260, 280) gegen ungewollte Kontaktierung sicher sind.

10. Akkupack nach einem der Ansprüche 1 bis 9, **dadurch gekennzeichnet, dass** die weiteren Gegenkupplungsmittel (26, 28, 260, 280) der elektrischen Leistungsübertragung vom Akkupack (24) auf einen weiteren Stromverbraucher dienen die, insbesondere zugleich mit und/oder bei angekuppelter Akku-Handwerkzeugmaschine (10).

11. Akku-Handwerkzeugmaschine mit einem Akkupack nach einem der vorhergehenden Ansprüche.

## Claims

1. Rechargeable battery pack having mechanical and electrical mating coupling means (34, 40, 42, 380) for releasable connection to an, in particular portable, current load, preferably a rechargeable-battery-operated handheld power tool (10), and/or a charging device, wherein the rechargeable battery pack (24, 240) is fitted with at least one further mating coupling means (26, 28, 260, 280) which is designed as an electrical charging contact means (26, 28, 260, 280) and which is accessible from the outside when the rechargeable battery pack (24, 240) is coupled to the rechargeable-battery-operated handheld power tool (10), wherein the further mating coupling means (26, 28, 260, 280) branch off from the mating coupling means (42, 380), **characterized in that** the further mating coupling means (26, 28, 260, 280) and the mating coupling means (42, 380) are integrally formed.

2. Rechargeable battery pack according to Claim 1, **characterized in that** the at least one further mating coupling means (26, 28, 260, 280) is arranged on a different side to the mechanical and electrical mating coupling means (34, 40, 42, 380), preferably outside on the lower face (31, 310) of the said rechargeable battery pack and/or on the side.

3. Rechargeable battery pack according to Claim 1 or 2, **characterized in that** the rechargeable battery pack (24, 240) is designed as a rechargeable lithium-ion battery.

4. Rechargeable battery pack according to one of Claims 1 to 3, **characterized in that** the at least one, in particular two, further mating coupling means (26, 28, 260, 280) are designed in a resilient and exposed manner.

5. Rechargeable battery pack according to one of Claims 1 to 4, **characterized in that** contact protection means (27, 270) which prevent unintentional electrical contact to the outside are provided for the further mating coupling means (26, 28, 260, 280).

6. Rechargeable battery pack according to one of Claims 1 to 5, **characterized in that** the mating coupling means are designed as tulip contacts (420), from which the further mating coupling means (260, 280) are angled away in the manner of a lug.

7. Rechargeable battery pack according to one of Claims 1 to 6, **characterized in that** the further mating coupling means (26, 28, 260, 280) are arranged within the outer contour of the rechargeable battery pack (24, 240), in particular in recesses (27, 270) in the housing.

8. Rechargeable battery pack according to one of Claims 1 to 7, **characterized in that** the further mating coupling means (26, 28) are arranged on the rear face (23) close to the lower face (31) of the rechargeable battery pack (24), in particular in a common recess (27) in the housing.

9. Rechargeable battery pack according to one of Claims 1 to 8, **characterized in that** the recess (27, 270) can be covered/closed, in particular flush with the contour, such that the further mating coupling means (26, 28, 260, 280) are secured against contact being made unintentionally.

10. Rechargeable battery pack according to one of Claims 1 to 9, **characterized in that** the further mating coupling means (26, 28, 260, 280) serve to transmit electrical power from the rechargeable battery pack (24) to a further current load, in particular at the same time as the rechargeable-battery-operated handheld power tool (10) is coupled and/or with the said rechargeable-battery-operated handheld power tool coupled. ,

11. Rechargeable-battery-operated handheld power tool having a rechargeable battery pack according to one of the preceding claims.

## Revendications

1. Bloc d'accumulateur comprenant des moyens d'accouplement conjugués mécaniques et électriques (34, 40, 42, 380) pour la connexion desserrable à un consommateur électrique, en particulier mobile, de préférence une machine-outil manuelle à accumulateur (10), et/ou un appareil de charge, le bloc d'accumulateur (24, 240) portant au moins un autre moyen d'accouplement conjugué (26, 28, 260, 280) configuré sous forme de moyen de contact de charge électrique (26, 28, 260, 280), qui est ensuite accessible depuis l'extérieur lorsque le bloc d'accumulateur (24, 240) est raccordé à la machine-outil manuelle à accumulateur (10), les autres moyens d'accouplement conjugués (26, 28, 260, 280) partant des moyens d'accouplement conjugués (42, 380), **caractérisé en ce que** les autres moyens d'accouplement conjugués (26, 28, 260, 280) et les moyens d'accouplement conjugués (42, 380) sont réalisés d'une seule pièce.

2. Bloc d'accumulateur selon la revendication 1, **caractérisé en ce que** l'au moins un autre moyen d'accouplement conjugué (26, 28, 260, 280) est disposé sur un autre côté que les moyens d'accouplement conjugués mécaniques et électriques (34, 40, 42, 380), de préférence à l'extérieur sur son côté inférieur (31, 310) et/ou latéralement.

3. Bloc d'accumulateur selon la revendication 1 ou 2, **caractérisé en ce que** le bloc d'accumulateur (24, 240) est configuré sous forme d'accumulateur lithium-ion.

4. Bloc d'accumulateur selon l'une quelconque des revendications 1 à 3, **caractérisé en ce que** l'au moins un, en particulier deux, autres moyens d'accouplement conjugués (26, 28, 260, 280) sont configurés de manière élastique et dégagée.

5. Bloc d'accumulateur selon l'une quelconque des revendications 1 à 4, **caractérisé en ce que** des moyens de protection de contact (27, 270) sont prévus pour l'autre moyen d'accouplement conjugué (26, 28, 260, 280), lesquels empêchent un contact électrique indésirable vers l'extérieur.

6. Bloc d'accumulateur selon l'une quelconque des revendications 1 à 5, **caractérisé en ce que** les moyens d'accouplement conjugués sont configurés sous forme de contacts tulipes (420), depuis lesquels les autres moyens d'accouplement conjugués (260, 280) sont coudés en forme de fanions.

7. Bloc d'accumulateur selon l'une quelconque des revendications 1 à 6, **caractérisé en ce que** les autres moyens d'accouplement conjugués (26, 28, 260, 280) sont disposés à l'intérieur du contour extérieur du bloc d'accumulateur (24, 240), en particulier dans des renfoncements (27, 270) du boîtier.

8. Bloc d'accumulateur selon l'une quelconque des revendications 1 à 7, **caractérisé en ce que** les autres moyens d'accouplement conjugués (26, 28) sont disposés du côté arrière (23) à proximité du côté inférieur (31) du bloc d'accumulateur (24), en particulier dans un renfoncement commun (27) du boîtier.

9. Bloc d'accumulateur selon l'une quelconque des revendications 1 à 8, **caractérisé en ce que** le renfoncement (27, 270) peut être recouvert/refermé, en particulier en affleurement avec son contour, de telle sorte que les autres moyens d'accouplement conjugués (26, 28, 260, 280) soient protégés contre un contact indésirable.

10. Bloc d'accumulateur selon l'une quelconque des revendications 1 à 9, **caractérisé en ce que** les autres moyens d'accouplement conjugués (26, 28, 260, 280) servent au transfert de puissance électrique depuis le bloc d'accumulateur (24) jusqu'à un autre consommateur électrique, en particulier conjointement avec la machine-outil manuelle à accumulateur (10) et/ou lorsque celle-ci est raccordée.

11. Machine-outil manuelle à accumulateur comprenant un bloc d'accumulateur selon l'une quelconque des revendications précédentes.
